# FASCICULE DE BREVET EUROPEEN

(11) **EP 4 204 141 B1**
(45) Date de publication et mention de la délivrance du brevet: **24.09.2025**
(21) Numéro de dépôt: 21802204.4
(22) Date de dépôt: 01.10.2021
(51) Int. Cl.: B01J 20/26, B01J 20/28, C02F 11/00, C02F 11/147

(54) **UTILISATION D'UNE COMPOSITION ASSÉCHANTE POUR LE CONDITIONNEMENT DE BOUES SALÈES**
VERWENDUNG EINER TROCKNUNGSZUSAMMENSETZUNG FÜR DIE BEHANDLUNG VON SALZIGEM SCHLAMM
USE OF A DRYING COMPOSITION FOR THE CONDITIONING OF A SALTY SLUDGE

(30) Priorité: 14.10.2020 FR 2010508
(43) Date de publication de la demande: 05.07.2023
(73) Titulaire: APROTEK, 42610 Saint Romain le Puy (FR)
(72) Inventeur: DELHEUR, Stéphane, 42680 Saint Marcellin en Forez (FR); CHAPELLE, Christian, 42160 Andrézieux Bouthéon (FR)
(74) Mandataire: Atout PI Laplace
(86) Numéro de dépôt international: PCT/EP2021/077092
(87) Numéro de publication internationale: WO 2022/078776

(56) Documents cités:
- EP-A1- 0 068 189
- EP-A1- 0 195 550
- EP-A2- 0 036 463
- CN-A- 101 643 308
- CN-A- 111 423 159
- DE-A1- 102012 102 473
- FR-A1- 2 818 560
- FR-A1- 3 029 195
- JP-A- H08 299 999
- US-A1- 2011 094 968

## Description

La présente invention concerne le secteur technique du traitement des boues salées urbaines et industrielles en général et plus particulièrement leur " conditionnement " avant leur élimination par les filières appropriées. La composition asséchante utilisée dans l'invention permet de pouvoir transporter et stocker facilement les boues salées à savoir toutes boues comportant des quantités même faibles de sels constitués par des anions inorganiques, notamment les chlorures, et des cations comme le sodium, le potassium, le calcium et le magnésium. Cette composition asséchante comprend : - au moins 50% et jusqu'à 99% en poids d'un polymère superabsorbant - et de 1% à 99% en poids d'un polymère floculant. L'invention concerne l'utilisation de la composition pour conditionner des boues salées.

### Domaine technique de l'invention

Une liste importante d'activités industrielles utilise des saumures et des eaux salines qui produisent de grandes quantités de boues contenant des sels, comme le chlorure de sodium, parfois dans des très fortes concentrations (5% et plus). Ces boues sont obtenues avec une siccité variable et sont souvent très liquides ou pâteuses malgré l'emploi de procédés mécaniques de déshydratation, tels que les filtres à bande et les centrifugeuses. Un conditionnement visant à préparer la boue afin d'augmenter sa siccité est donc généralement nécessaire afin de faciliter sa manipulation, son transport et son stockage. Parmi les différents conditionnements visant à préparer la boue, on peut citer à titre non exhaustif :
- la coagulation thermique qui consiste en une cuisson des boues,
- le conditionnement chimique : de très grandes quantités de chaux, carbonates et divers produits minéraux mais également de produits organiques (sciures de bois) sont utilisées dans le but d'épaissir et surtout d'assécher les boues. Une fois traitées le poids initial des boues s'en trouve alors fortement augmenté : par exemple pour traiter 100m³ de boues il faut rajouter entre 50 et 100 tonnes de chaux. Ceci en accroît leur volume et donc leur coût de transport et d'enfouissement.

L'homme de métier comprendra que le poids final des boues et donc leur coût de transport et le prix de l'élimination filière est un problème technique majeur.

L'invention a pour objet une composition asséchante qui permet, à des dosages très faibles, d'absorber la partie liquide des boues salées.

### Arrière-plan technique

En raison de leur concentration élevée en sel, les boues salées sont généralement conditionnées, lorsque cela est possible, à l'aide de traitements physiques énergivores et donc couteux, par :
- Augmentation de la température.
- Conditionnement thermique : consistant à soumettre la boue pendant une courte durée (30 à 120 min) à des températures élevées sous l'action de la vapeur.
- Congélation/décongélation.

Le document US2011094968 divulgue une composition pour filtrer de l'eau contenant des cendres volantes. Le document JPH08299999 divulgue une composition pour le conditionnement de boues salées.

Parmi les additifs qui ont été préconisés pour tenter d'assécher les boues, on connaît le brevet FR3029195 de la déposante qui propose de grandement améliorer l'efficacité du conditionnement chimique des boues par l'utilisation conjointe d'un polymère superabsorbant (SAP) et de chaux. L'ajout de superabsorbant dans la composition permet notamment d'augmenter considérablement l'efficacité de rétention en eau de la chaux. Toutefois, il est bien connu par l'homme du métier que plus la concentration en chlorure de sodium du liquide à absorber augmente, plus la capacité d'absorption du SAP diminue, rendant la mise en œuvre de l'invention impossible dans le cas de boues salées, sauf à devoir surconsommer les additifs en question.

### Présentation de l'invention

La déposante a procédé à de nombreux essais et mis en évidence que lorsqu'une composition à base de polymère superabsorbant et de polymère floculant est additionnée à une boue salée sous la forme d'un mélange sec, le séchage de la boue est non seulement rendu possible à de très faibles proportions mais est aussi extrêmement rapide.

Dans l'utilisation de La présente invention, il a été trouvé, de façon inattendue, qu'une composition asséchante particulièrement efficace pour le conditionnement des boues salées peut être utilisée dès lors qu'elle comprend - au moins 50% et jusqu'à 99% en poids d'un polymère superabsorbant en poudre - et de 1% à 50% en poids d'une poudre de polymère floculant.

### Résumé de l'invention

L'invention concerne l'utilisation d'une composition asséchante pour conditionner des boues salées. L'utilisation concerne une composition asséchante en poudre pour permettre d'effectuer un conditionnement des boues salées optimum avant leur élimination par les filières appropriées. La composition permet de pouvoir assécher rapidement et facilement les boues salées. Cette composition asséchante comprend :
- au moins 50% et jusqu'à 99% en poids d'une poudre de polymère superabsorbant, de préférence entre 70% et 95% en poids, et avantageusement entre 75% et 90% en poids, caractérisé en ce que ledit polymère superabsorbant est un homopolymère ou un copolymère synthétique réticulé comprenant de l'acide acrylique partiellement ou totalement salifié, de type polyacrylate de sodium réticulé, présentant une capacité de rétention d'eau supérieure ou égale à 30 fois son poids en eau déminéralisée, de préférence supérieure ou égale à 50 fois.
- et de 1% à 50% en poids d'une poudre de polymère floculant, de préférence entre 5% et 30% en poids, et avantageusement entre 10% et 25% en poids, caractérisé en ce que le polymère floculant est un (co)polymère hydrosoluble anionique ou non-ionique de haut poids moléculaire supérieur à 10⁵ g/ mol et de préférence supérieur à 10⁶ g/ mol.

Les compositions, utilisées dans l'invention, ajoutées aux boues salées transforment cette dernière en une boue transportable et stockable et élimine tous les inconvénients de l'art antérieur. En particulier, l'assèchement de la boue salée n'est plus influencé par sa teneur en sel. De plus, la présence de polymère floculant dans la composition permet de manière tout à fait surprenante de réduire de façon très importante la quantité de polymère superabsorbant nécessaire pour obtenir une boue pelletable et donc transportable.

### Description détaillée de l'invention

La revendication 1 contient des compositions asséchantes présentant des propriétés optimisées pour permettre de transporter et stocker les boues salées afin d'en faciliter leur extraction. Elles se présentent sous forme sèche, à savoir un mélange de poudres, de sorte qu'elles puissent être facilement transportés, stockés et mises en place.

La composition asséchante pour les boues salées comprenant :
- au moins 50% et jusqu'à 99% en poids d'une poudre de polymère superabsorbant, de préférence entre 70% et 95% en poids, et avantageusement entre 75% et 90% en poids, caractérisé en ce que ledit polymère superabsorbant est un homopolymère ou un copolymère synthétique réticulé comprenant de l'acide acrylique partiellement ou totalement salifié, de type polyacrylate de sodium réticulé, présentant une capacité de rétention d'eau supérieure ou égale à 30 fois son poids en eau déminéralisée, de préférence supérieure ou égale à 50 fois
- et de 1% à 50% en poids d'une poudre de polymère floculant, de préférence entre 5% et 30% en poids, et avantageusement entre 10% et 25% en poids, caractérisé en ce que le polymère floculant est un (co)polymère hydrosoluble anionique ou non-ionique de haut poids moléculaire supérieur à 10⁵ g/ mol et de préférence supérieur à 10⁶ g/ mol.

Les compositions asséchantesse présentant sous la forme d'une poudre sont utilisées à raison de 2 à 25 kg par tonne de boues salées, de préférence 3 à 20 kg par tonne de boues salées.

Les sels sont constitués par des anions comme les carbonates, les chlorures, les sulfates, les fluorures, les nitrates et des cations comme le sodium, le potassium, le calcium et le magnésium. Ces sels peuvent former des associations ioniques solides dans le sol et le sous-sol, ou sont liés avec d'autres composés organiques ou inorganiques sous forme de complexes moléculaires.

La composition des boues dépend de la nature de la pollution initiale de l'eau. Le chlorure de sodium est le sel le plus rejeté ou présent naturellement dans le milieu naturel. Les principales sources de rejets chlorurés sont les effluents industriels, les eaux pluviales issues des zones urbanisées, les eaux usées domestiques, les curages de zones portuaires.Ces rejets ont des concentrations très variées qui peuvent atteindre 200 g/L et donc fortement affecter le traitement des déchets liquides qui les contiennent.

La présente invention concerne le secteur technique du traitement des boues salées urbaines et industrielles en général, notamment des boues chlorurées, et leur "conditionnement" avant leur élimination par les filières appropriées. La composition asséchante utilisée dans l'invention permet de pouvoir transporter et stocker facilement les boues salées à savoir toutes boues comportant des quantités même faibles de sels constitués par des anions inorganiques, notamment les chlorures, et des cations comme le sodium, le potassium, le calcium et le magnésium.

Un polymère superabsorbant est un agent hydro rétenteur d'origine naturelle ou synthétique qui présente une capacité de rétention d'eau supérieure ou égale à 30 fois son poids en eau déminéralisée, de préférence supérieure ou égale à 50 fois, avantageusement supérieure ou égale à 100 fois. Ce type de polymère est généralement connu sous l'abréviation : SAP ("superabsorbent polymer"). Il se présente généralement sous la forme de poudre, agglomérée ou non. Leur structure basée sur un réseau tridimensionnel assimilable à une multitude de petites cavités ayant chacune d'elles la capacité de se déformer et d'absorber de l'eau leur confère la propriété d'absorber de très grandes quantités d'eau et donc de gonfler.

Les polymères superabsorbants d'origine naturelle, utilisables, sont par exemple ceux décrits dans les brevets US358364, US1693890, US3846404, US3935099 ou US3661815...On citera de façon non limitative : la gomme guar, les alginates, la carboxyméthyle cellulose, le dextran, la gomme xanthane... Ces polymères ne sont pas selon l'invention.

Les SAPs d'origine synthétique utilisables, sont par exemple, des polymères hydrosolubles réticulés, ou pouvant être réticulés. Il en existe de nombreux types. De tels polymères sont par exemple décrits dans le brevet FR 2559158 dans lequel il est décrit des polymères réticulés de l'acide acrylique ou méthacrylique, des copolymères greffés réticulés du type polysaccharide / acide acrylique ou méthacrylique, des terpolymères réticulés du type acide acrylique ou méthacrylique / acrylamide / acrylamide sulfoné et leurs sels de métaux alcalino -terreux ou alcalins.

Les monomères utilisés pour la préparation des polymères superabsorbants sont choisis parmi l'acrylamide et/ou d'acide acrylique partiellement ou totalement salifié et/ou d'ATBS (acrylamido tertio butylsufonate) partiellement ou totalement salifié et/ou de NVP (N vinylpyrrolidone) et/ou d'acryloylmorpholine et/ou d'acide itaconique partiellement ou totalement salifié.

Dans l'invention, les polymères superaborbants sont des homopolymères ou des copolymères réticulés anioniques à base d'acide acrylique partiellement ou totalement salifié.

D'autres monomères hydrophiles, comme par exemple les monomères cationiques, mais aussi des monomères à caractères hydrophobes, pourront être utilisés pour produire les polymères superabsorbants. Parmi les monomères cationiques, on citera à titre d'exemple les sels de diallyldialkyl ammonium et les monomères de type dialkylaminoalkyl (meth)acrylate, dialkylaminoalkyl (meth)acrylamide ainsi que leurs sels d'ammonium quaternaire ou d'acides. On citera en particulier l'acrylate de dimethylaminoethyl (ADAME) et/ou le methacrylate de dimethylaminoethyle (MADAME) quaternisés ou salifiés, le chlorure d'acrylamidopropyltrimethylammonium (APTAC) et/ou le chlorure de methacrylamidopropyltrimethylammonium (MAPTAC).

Les polymères superabsorbants synthétiques sont généralement réticulés avec 100 à 6000 ppm d'au moins un agent réticulant choisi dans le groupe comprenant les composés acryliques comme par exemple le méthylène bis acrylamide, allyliques comme par exemple le chlorure de tertra allylammonium, vinyliques comme par exemple le divinyl benzène, diepoxy, sels métalliques...Certains peuvent également avoir une double réticulation comme par exemple par un réticulant acrylique.

On utilise dans l'invention les polymères superabsorbants d'origine synthétique de type polyacrylate de sodium réticulé.

Le SAP peut être obtenu par toutes les techniques de polymérisation bien connues par l'homme de métier : polymérisation en gel, polymérisation par précipitation, polymérisation en émulsion (aqueuse ou inverse) suivie ou non d'une étape distillation, polymérisation en suspension, polymérisation en solution, ces polymérisations étant suivies ou non d'une étape permettant d'isoler une forme sèche du (co)polymère par tous types de moyens bien connus de l'homme de métier.

Le polymère superabsorbant pourra être post-réticulé en surface à savoir qu'ils :
- résultent de la polymérisation avec réticulation partielle de monomères éthyléniquement insaturés hydrosolubles comportant au moins une fonction carboxylique, en particulier les acides acryliques et méthacryliques et leurs sels alcalins, qu'ils soient obtenus par un procédé de polymérisation en solution, en masse ou en suspension inverse, tels que décrits par exemple dans les demandes de brevets EP312952, EP441507 ou EP742231.
- et présentent une réticulation l'extérieur des grains de polymères. Cette réticulation de surface est dénommée post-réticulation car elle se fait sur la poudre de SAP lorsque la polymérisation est terminée et le SAP partiellement déshydraté, pendant le séchage. La post-réticulation permet de former une coquille fortement réticulée autour des particules de SAP. Les particules de SAP sont présentes alors une structure "coeurcoquille".

Les étapes de post-réticulation de polymères hydrophiles possédant des groupes carboxyliques et/ou carboxylates par un agent polyfonctionnel sont bien connues par l'homme de métier. La poudre sèche est typiquement post-réticulée en la faisant réagir avec d'autres agents de réticulation tels que, par exemple, des agents de réticulation organiques et/ou des cations multivalents, pour produire une couche de surface plus fortement réticulée par rapport à l'intérieur des particules. Les procédés couramment utilisés pour la post-réticulation en surface, comprennent une étape consistant à mettre en contact le polymère de base avec un agent de post-réticulation en surface suivi par une étape de traitement thermique ultérieure. Cette dernière est destinée à achever la post-réticulation en surface, le traitement thermique étant généralement effectué à chaud, généralement à l'aide de "sécheurs" en continu. On citera à titre d'exemple les documents GB 2126591, EP789048, FR2923830.Il existe beaucoup de molécules décrites dans la littérature aptes à réagir suffisamment vite sur les groupements carboxyliques des SAP, afin de réaliser le pontage des chaînes polymériques. Un moyen bien connu consiste à post-traiter son polymère superabsorbants « de base ». Pour ce faire, la poudre séchée de polymère superabsorbant dit « de base » est soumise à une réticulation supplémentaire sur une couche superficielle de ses particules, par une étape de post-réticulation en surface. La post-réticulation en surface augmente la densité de réticulation à la surface de l'enveloppe des particules de polymère superabsorbant réduisant ainsi la capacité d'absorption du polymère superabsorbant dans la couche de surface.

L'invention sera avantageusement mise en œuvre avec des particules de polymère superabsorbant de forme sphérique ou non et dont le diamètre moyen est compris en général entre 5 µm et 5000 µm et de préférence entre 100 et 250 µm. Ce polymère hydro rétenteur (ou le mélange d'hydro rétenteurs) représente de 50% à 99% en poids de cette dernière, de préférence de 70% à 95% en poids et avantageusement plus de 75% et moins de 90% en poids de la composition asséchante selon l'invention. Avantageusement le SAP aura une granulométrie similaire à celle de la poudre de polymère floculant également présente dans la composition.

En pratique, le polymère floculant constituant un des 2 éléments essentiels à la composition est un (co)polymère hydrosoluble anionique ou non-ionique de haut poids moléculaire soluble dans l'eau, se présentant sous la forme d'une poudre, et dont le poids moléculaire est supérieur à 10⁵ g/ mol et de préférence supérieur à 10⁶ g/ mol. Le polymère hydrosoluble de haut poids moléculaire a été obtenue par polymérisation d'au moins un monomère choisi parmi :
- les monomères non ioniques : les monomères vinyliques solubles dans l'eau. Des monomères préférés appartenant à cette classe incluent l'acrylamide et le méthacrylamide, les dérivés de l'acrylamide comme les N-alkylacrylamide par exemple le N-isopropylacrylamide, le N-tert-butylacrylamide, l'octylacrylamide ainsi que les N, Ndialkylacrylamides comme le N-N-diméthylacrylamide et le N-méthylolacrylamide. Également peuvent être utilisés la vinylformamide, la N-vinylpyridine, la Nvinylpyrrolidone, les hydroxyalkyl acrylates et méthacrylates. Un monomère vinylique non ionique préféré sera l'acrylamide.
- et/ou les monomères anioniques présentant des fonctionnalités acryliques, vinyliques, maléiques, fumariques, allyliques et contenir un groupe carboxy, phosphonate, sulfonate, ou un autre groupe à charge anionique, ou bien le sel d'ammonium ou de métal alcalino terreux ou de métal alcalin correspondant d'un tel monomère. Parmi ceux-ci on trouve l'acide acrylique, l'acide méthacrylique, l'acide acrylamidométhylpropanesulfonique, l'acide acrylamidométhylbutanoïque, l'acide maléique, l'acide fumarique, l'acide itaconique, l'acide vinylsulfonique, l'acide styrène sulfonique, l'acide vinylphosphonique, l'acide allylsulfonique, l'acide allylphosphonique et leurs sels solubles dans l'eau d'un métal alcalin, d'un métal alcalins terreux, et d'ammonium.

L'invention sera avantageusement mise en œuvre avec des particules de polymère floculant de forme sphérique ou non et dont le diamètre moyen est compris en général entre 5 µm et 5000 µm et de préférence entre 100 et 250 µm. Le polymère floculant (ou le mélange de polymères floculants) représente de 1% à 50% en poids de cette dernière, de préférence de 5% à 30% en poids et avantageusement plus de 10% et moins de 25% en poids de la composition asséchante selon l'invention. Avantageusement le polymère floculant aura une granulométrie similaire à celle de la poudre de polymère superabsorbant également présente dans la composition.

Le polymère superabsorbant et le polymère floculant se présentent sous la forme d'un mélange homogène et sont donc introduits simultanément. Il s'agit d'une véritable " composition ".

L'ajout de la composition dans l'invention s'effectue directement dans la boue salée par mélange mécanique (vis de brassage, pelle mécanique) et permet d'obtenir un effet asséchant et agglomérant optimisés. Il a été observé que la composition produit des effets combinés très supérieurs à un ajout séparé des composants. La composition asséchante a la propriété d'augmenter de manière spectaculaire les capacités de rétention en liquides salés, notamment chlorurés. Ce résultat était totalement inattendu dans la mesure où la présence de sel conduit dans la plupart des cas à l'inactivation des SAPs en limitant sa capacité de gonflement de sorte que l'homme du métier n'était donc pas incité à utiliser ce type de polymère pour résoudre le problème présent. La présence d'un polymère floculant anionique ou non-ionique semble, sans que cela puisse s'expliquer, avoir un effet bénéfique sur le polymère superabsorbant en limitant la sensibilité de ce dernier au sel. Il y a donc une vraie et inattendue synergie des deux ingrédients de la composition.

### Exemples

Des essais comparatifs ont été réalisés en utilisant les composés suivants :
- polymères superabsorbants (SAP) : tels que décrits dans le tableau 1 ci-après
- polymère floculant (PF) : marque "APROFLOC" PA03 : polymère hydrosoluble anionique de haut poids moléculaire (5.10⁶ g/mol) copolymère d'acrylate de sodium (30%) et d'acrylamide (70%)

**[Tableaux1]**

| Référence produit | Type de polymère super absorbant | Nom commercial | Anionicité | Tailles moyennes des particules de SAP |
|---|---|---|---|---|
| P150 | Polyacrylate de sodium réticulé | Marque "Apromud" P150 | 100 % Anionic | < 150µm |
| G300 | Polyacrylate de sodium réticulé et post réticulé | Marque "Apromud" G300 | 100 % Anionic | 500 - 850 µm |

Des essais d'assèchement (solidification/stabilisation) ont été conduits sur un type de boue biologique provenant de station d'épuration (15% de matières sèches) à laquelle le déposant à rajouté différentes quantités de chlorure de sodium exprimés en concentrations massiques (cf tableau 2).

**[Tableaux2]**

| Référence des boues salées testées | Quantités de chlorure de sodium exprimés en concentrations massiques (Poids %) |
|---|---|
| B1 | 3 % |
| B2 | 5 % |

Pour la réalisation des exemples présentés dans le tableau 3, les mélanges des agents asséchants avec la boue salée ont été réalisés de façon mécanique jusqu'à homogénéisation visuelle.

**[Tableaux3]**

| | Nature de la boue | Composition de l'asséchant (SAP et PF) exprimé en poids% | Dosage de l'asséchant exprimé en kg par tonne de boue | Assèchement de la boue suffisant pour la rendre pelletable (OUI ou NON) |
|---|---|---|---|---|
| *Contre-exem ple 1* | B1 | P150 (100%) | 10 kg/tonne | NON |
| *Contre-exem ple 2* | B1 | G300 (100%) | 10 kg/tonne | NON |
| *Contre-exem ple 3* | B2 | P150 (100%) | 10 kg/tonne | NON |
| *Contre-exem ple 4* | B2 | G300 (100%) | 10 kg/tonne | NON |
| *Contre-exem ple 5* | B2 | G300 (100%) | >30 kg/tonne | OUI |
| *Exemple 1* | B1 | P150 (95%) / PF (5%) | 10 kg/tonne | OUI |
| *Exemple 2* | B2 | P150 (88%) / PF (12%) | 10 kg/tonne | OUI |
| *Exemple 3* | B1 | P150 (80%) / PF (20%) | 10 kg/tonne | OUI |
| *Exemple 4* | B2 | G300 (95%) / PF (5%) | 10 kg/tonne | OUI |
| *Exemple 5* | B1 | G300 (88%) / PF (12%) | 10 kg/tonne | OUI |
| *Exemple 6* | B2 | G300 (80%) / PF (20%) | 10 kg/tonne | OUI |
| *Contre-exem ple 6 Addition séquencée* | B2 | P150 (88%) additionné en premier puis PF (12%) additionné dans un deuxième temps | 8,8kg/tonne de P150 puis 1,2kg/tonne de PF | NON |
| *Contre-exem ple 7 Addition séquencée* | B2 | PF (12%) additionné en premier puis P150 (88%) additionné dans un deuxième temps | 1,2kg/tonne de PF puis 8,8kg/tonne de P150 | NON |

Comme on peut le voir dans le tableau 3, comparativement à un ajout de superabsorbant seul, quel que soit le polymère superabsorbant utilisé, les compositions selon l'invention permettent l'assèchement des boues salées en diminuant de façon drastique la quantité de superabsorbant nécessaire pour arriver à ce résultat. Les exemples indiquent de plus clairement que lorsque les ingrédients de la composition selon l'invention ne sont pas additionnés sous la forme d'un mélange sec mais de façon fractionnée, le séchage de la boue n'est plus rendu possible aux mêmes dosages. Il semble qu'il y ait, de manière inattendue, un effet synergique qui se produise dès lors que le SAP et le polymère floculant sont additionnés en mélange en présence de sels. Nous avons, de plus, pu constater visuellement que cet assèchement était aussi extrêmement rapide. Les compositions asséchantes de l'invention sont tout à la fois simples (un seul point de mélange à réaliser) et rapides à mettre en œuvre, et efficaces. Elles répondent en cela parfaitement aux besoins de l'industrie pour faciliter le transport et le stockage des boues salées à savoir toutes boues comportant des quantités même faibles de sels constitués par des anions inorganiques, notamment les chlorures, et des cations comme le sodium, le potassium, le calcium et le magnésium.

## Revendications

1. Utilisation d'une composition asséchante pour le conditionnement de boues salées issues des effluents industriels, des eaux pluviales des zones urbanisées, des eaux usées domestiques ou de curages de zones portuaires **caractérisée en ce que** ladite composition asséchante comprend un mélange constitué :
- d'au moins 50% et jusqu'à 99% en poids d'une poudre de polymère superabsorbant, de préférence entre 70% et 95% en poids, et avantageusement entre 75% et 90% en poids, **caractérisé en ce que** ledit polymère superabsorbant est un homopolymère ou un copolymère synthétique réticulé comprenant de l'acide acrylique partiellement ou totalement salifié, de type polyacrylate de sodium réticulé, présentant une capacité de rétention d'eau supérieure ou égale à 30 fois son poids en eau déminéralisée, de préférence supérieure ou égale à 50 fois
- et de 1% à 50% en poids d'une poudre de polymère floculant, de préférence entre 5% et 30% en poids, et avantageusement entre 10% et 25% en poids, **caractérisé en ce que** le polymère floculant est un (co)polymère hydrosoluble anionique ou non-ionique de haut poids moléculaire supérieur à 10⁵ g/ mol et de préférence supérieur à 10⁶ g/ mol.

2. Utilisation d'une composition asséchante pour le conditionnement de boues salées selon la revendication 1, dans laquelle lesdites poudres de polymère superabsorbant et de polymère floculant présentent une taille de particules comprise entre 5 µm et 5000 µm et de préférence entre 100 et 250 µm.

3. Utilisation de la composition asséchante selon la revendication 1 ou 2, pour le conditionnement de boues à raison de 2 à 25 kg par tonne de boues salées issues des effluents industriels, des eaux pluviales des zones urbanisées, des eaux usées domestiques ou de curages de zones portuaires.

## Patentansprüche

1. Verwendung einer Trocknungszusammensetzung zur Konditionierung von salzigen Schlämmen, die aus industriellen Abwässern, Regenwasser aus städtischen Gebieten, häuslichen Schmutzwässern oder Reinigungen von Hafengebieten stammen, **dadurch gekennzeichnet, dass** die Trocknungszusammensetzung eine Mischung beinhaltet, bestehend aus:
- zu mindestens 50 Gew.-% und bis zu 99 Gew.-%, vorzugsweise zwischen 70 Gew.-% und 95 Gew.-% und vorteilhafterweise zwischen 75 Gew.-% und 90 Gew.-% einem Superabsorberpolymerpulver, **dadurch gekennzeichnet, dass** das Superabsorberpolymer ein synthetisches, vernetztes Homopolymer oder Copolymer ist, das teilweise oder vollständig versalzte Acrylsäure vom vernetzten Natriumpolyacrylat-Typ beinhaltet, das eine Wasserrückhaltekapazität größer als oder gleich 30 Mal sein Gewicht an demineralisiertem Wasser aufweist, vorzugsweise größer als oder gleich 50 Mal
- und zu 1 Gew.-% bis 50 Gew.-%, vorzugsweise zwischen 5 Gew.-% und 30 Gew.-%, vorteilhafterweise zwischen 10 Gew.-% und 25 Gew.-% einem Flockungsmittelpolymerpulver, **dadurch gekennzeichnet, dass** das Flockungsmittelpolymer ein anionisches oder nichtionisches, wasserlösliches (Co)Polymer mit einem hohem Molekulargewicht von größer als 10⁵ g/mol und vorzugsweise größer als 10⁶ g/ mol ist.

2. Verwendung einer Trocknungszusammensetzung zur Konditionierung von salzigen Schlämmen nach Anspruch 1, wobei die Superabsorberpolymer- und Flockungsmittelpolymerpulver eine Partikelgröße zwischen 5 µm und 5000 µm und vorzugsweise zwischen 100 µm und 250 µm aufweisen.

3. Verwendung einer Trocknungszusammensetzung nach Anspruch 1 oder 2 zur Konditionierung von Schlämmen in einer Menge von 2 bis 25 kg pro Tonne an salzigen Schlämmen, die aus industriellen Abwässern, Regenwasser aus städtischen Gebieten, häuslichen Schmutzwässern oder Reinigungen von Hafengebieten stammen.

## Claims

1. Use of a drying composition for conditioning saline sludges from industrial effluents, rainwaters from urbanized areas, domestic wastewaters or cleaning out of port areas, **characterized in that** said drying composition comprises a mixture consisting of:
- at least 50% and up to 99% by weight of a superabsorbent polymer powder, preferably between 70% and 95% by weight, and advantageously between 75% and 90% by weight, **characterized in that** said superabsorbent polymer is a crosslinked synthetic homopolymer or copolymer comprising partially or totally salified acrylic acid, of the crosslinked sodium polyacrylate type, having a water retention capacity greater than or equal to 30 times its weight in demineralised water, preferably greater than or equal to 50 times
- and from 1% to 50% by weight of a flocculant polymer powder, preferably between 5% and 30% by weight, and advantageously between 10% and 25% by weight, **characterized in that** the flocculant polymer is an anionic or non-ionic watersoluble (co)polymer of high molecular weight greater than 10⁵ g/mol and preferably greater than 10⁶ g/mol.

2. Use of a drying composition for conditioning saline sludges according to claim 1, in which the said powders of superabsorbent polymer and of flocculant polymer have a particle size of between 5 µm and 5000 µm and preferably between 100 and 250 µm.

3. Use of the drying composition according to claim 1 or 2 for conditioning sludge at the rate of 2 to 25 kg per ton of saline sludge from industrial effluents, rainwater from urbanized areas, domestic wastewaters or cleaning out of port areas.
